# DEMANDE DE BREVET EUROPEEN

(11) **EP 0 810 085 A1**
(43) Date de publication de la demande: **03.12.1997**
(21) Numéro de dépôt: 97401154.6
(22) Date de dépôt: 27.05.1997
(51) Int. Cl.: B32B 17/06, E04F 13/14

(54) **Structure feuilletée pour bâtiment**

(30) Priorité: 31.05.1996 FR 9606723
(71) Demandeur: SAINT-GOBAIN VITRAGE, 92400 Courbevoie (FR)
(72) Inventeur: Demars, Yves M., 60600 Clermont (FR); Mennechez, Françoise Mme., 60200 Compiegne (FR); Morin, Claude M., 92800 Puteaux (FR)
(74) Mandataire: Muller, René

(57) **Abrégé**

L'invention concerne une structure feuilletée apte à être utilisée notamment en tant que parement ou élément de façade d'un bâtiment. Cette structure comprend au moins une plaque en une roche, notamment une roche ornementale, assemblée à l'aide d'au moins une couche adhésive, à au moins une feuille de verre.

## Description

La présente invention concerne une structure feuilletée comprenant au moins une plaque de roche notamment de roche ornementale, utilisée en particulier en tant que parement dans le bâtiment.

Par plaque de roche ornementale on entend selon l'invention une plaque en une roche telle que le marbre, le granit, utilisée couramment dans le bâtiment notamment en tant que parement extérieur ou intérieur, dans la décoration, etc...

Les plaques de marbre par exemple sont largement utilisées en tant que parement dans le bâtiment, en étant dans cette application, soit collées à l'aide d'une colle à base de ciment directement sur le mur porteur, soit en variante, montées sur une armature. Ces plaques présentent des épaisseurs relativement importantes, par exemple supérieures à 10 mm pour les plaques de petites surfaces et supérieure à 20 mm pour les plaques de plus grandes surfaces, c'est-à-dire de l'ordre du m², pour avoir les caractéristiques mécaniques suffisantes permettant leur fabrication, leur manipulation, leur fixation et leur maintien dans le temps sans risque de casse ou détérioration. En effet, le marbre est un matériau relativement fragile et sensible aux chocs.

Or le marbre est aussi un matériau souvent choisi par les architectes pour son aspect, et la beauté de ses veines, et lorsqu'il est collé directement sur le mur, il ne met pas en valeur toutes ses qualités esthétiques et notamment il ne laisse pas paraître la texture de ses veines aussi bien qu'il pourrait le faire s'il était vu par transparence et sous une faible épaisseur.

Un des objets de l'invention est une structure utilisant au moins une plaque en marbre ou en une autre roche ornementale pouvant être utilisée dans le bâtiment notamment en tant que parement, qui présente des propriétés de résistance mécanique supérieure à celle de la roche seule.

Un autre objet de l'invention est une structure permettant la vision d'une plaque en marbre ou en une autre roche ornementale par transparence, c'est-à-dire laissant paraître la texture interne de ladite plaque.

L'invention propose une structure feuilletée rigide pouvant être utilisée notamment en tant que parement ou en tant qu'élément de façade ou en tant qu'élément de cloison dans un bâtiment, qui comprend au moins une plaque de roche ornementale, notamment une plaque de marbre ou de granit, assemblée à l'aide d'au moins une couche adhésive, à au moins une feuille de verre.

La structure feuilletée peut être asymétrique et formée d'une plaque de roche ornementale assemblée à une feuille de verre à l'aide d'une couche intercalaire adhésive.

Lorsque la roche ornementale est en marbre ou en un autre matériau non entièrement étanche à l'eau ou susceptible de relarguer des sels ou autre substance vers l'interface roche-couche adhésive, l'invention prévoit l'utilisation d'une couche adhésive capable de conserver des propriétés d'adhésion suffisantes pour la structure feuilletée. Cette couche adhésive peut alors être à base d'un polyuréthane non sensible à l'humidité.

En variante ou en combinaison, l'invention prévoit un traitement de ia roche ornementale, notamment un traitement d'imprégnation d'au moins une couche superficielle de ladite roche à l'aide d'une résine ou tout autre produit susceptible de former une barrière aux substances capables d'affecter l'adhésion ultérieure avec la couche intercalaire.

Le traitement de la roche ornementale a aussi comme objectif la réalisation d'une face susceptible de procurer une bonne adhésion avec la couche intercalaire, qui se conserve dans le temps et dans les conditions d'utilisation variés.

Le traitement de la plaque de roche ornemental a encore pour objectif de procurer des points d'ancrage dans au moins une partie de l'épaisseur de la plaque pour la couche adhésive.

Il peut également procurer une meilleure cohésion de la plaque, un renforcement de ses propriétés mécaniques, une meilleure facilité de découpe.

La résine ou autre produit utilisé pour l'imprégnation de la plaque doit présenter une transparence de manière à ne pas affecter l'aspect ou l'esthétique de la roche ornementale.

La résine peut être une résine acrylique, une résine époxy, une résine polyuréthane, une résine phénolique. L'imprégnation peut s'effectuer sous vide et/ou pression.

L'utilisation d'une résine d'imprégnation permet le cas échéant de réduire la qualité du poli de la plaque.

La couche intercalaire pouvant être utilisée peut alors être toute couche intercalaire transparente utilisée dans la fabrication des structures feuilletées comprenant des feuilles de verre. Ce peut être par exemple du polyuréthane, du polyvinylbutyral (PVB), de l'éthylène-vinyl-acétate (EVA), du silicone.

La structure feuilletée selon l'invention peut aussi être une structure symétrique, c'est-à-dire qu'elle peut présenter deux feuilles extérieures en un même matériau. Ainsi, les deux feuilles extérieures peuvent être des feuilles de verre qui prennent la plaque de roche ornementale en sandwich.

Les feuilles de verre extérieures formant barrière contre l'humidité, l'adhésion avec la plaque peut être obtenue à partir de toute couche intercalaire utilisable dans la fabrication des vitrages feuilletés.

Une autre structure feuilletée conforme à l'invention peut comprendre deux plaques de roche extérieures prenant en sandwich au moins une feuille de verre.

La structure feuilletée selon l'invention peut donc comprendre plusieurs feuilles de verre et plusieurs plaques de roche, l'association verre-roche procurant divers avantages et caractéristiques déjà décrites ou décrites par la suite.

L'invention sera décrite plus particulièrement par la suite en relation avec l'utilisation d'une plaque de marbre, étant entendu que des plaques en d'autres roches notamment ornementales, le cas échéant reconstituées, entrent aussi dans le cadre de l'invention.

La structure selon l'invention qui associe une plaque de marbre à une plaque de verre permet d'utiliser en tant que plaque de marbre, des plaques d'épaisseurs bien plus réduites que dans le cas des plaques de marbre utilisées dans les structures monolithiques évoquées précédemment.

Ainsi, un des avantages de la structure feuilletée selon l'invention est le gain de poids qu'elle procure comparée à une plaque monolithique en marbre qui présenterait des propriétés mécaniques et de mise en oeuvre équivalentes.

De sorte que la structure selon l'invention peut être utilisée notamment en tant que parement sur des structures porteuses également allégées et/ou aussi sur des hauteurs de bâtiments très importantes.

Outre les propriétés mécaniques améliorées de la structure feuilletée par rapport à une plaque monolithique de même épaiseur, cette structure feuilletée du fait qu'elle peut utiliser une plaque de marbre de faible épaisseur présente lorsque la couche adhésive est transparente une transparence partielle ou une translucidité permettant de visualiser les veines de la texture du marbre.

Cet effet de transparence peut être accentué par un éclairage naturel ou artificiel placé derrière la structure feuilletée.

La structure feuilletée selon l'invention dans sa variante asymétrique peut être utilisée en tant que parement de façade d'un bâtiment aussi bien avec la plaque de marbre orientée vers l'extérieur du bâtiment, qu'au contraire avec la plaque de marbre orientée vers l'intérieur du bâtiment. Cette dernière disposition peut se révéler avantageuse par exemple lorsque la structure feuilletée est utilisée pour revêtir la partie basse du bâtiment car le verre présente une meilleure résistance aux agents extérieurs que le marbre plus poreux et fragile, aussi bien aux agents extérieurs naturels, que vis-à-vis d'autres actions telles que la pollution, les graffitis. Le verre est aussi plus facilement nettoyable que le marbre.

Sous un des aspects de l'invention, la couche adhésive résistante à l'humidité est une couche à base d'un polyuréthane de préférence thermoplastique que l'on peut choisir parmi les polyuréthanes connus et utilisés dans des assemblages feuilletés en verre et en matière plastique, notamment les vitrages de sécurité, associant au moins une feuille de verre et au moins une feuille de polycarbonate à l'aide de cette couche adhésive. De tels vitrages de sécurité sont par exemple des vitrages anti-effractions ou des vitrages anti-balles tels que ceux décrits dans la publication de brevet EP 0 130 886.

La plaque de marbre pouvant être utilisée dans la structure feuilletée selon l'invention peut présenter une épaisseur pouvant descendre jusqu'à environ 3 mm si désiré.

Cette plaque peut être entièrement préparée avant l'assemblage, c'est-à-dire polie sur ces deux faces ou le cas échéant sur sa seule face, celle destinée à être extérieure dans l'assemblage, ou dans une variante avantageuse selon l'invention, elle peut être préparée selon le procédé décrit ci-après.

La plaque de marbre destinée à être assemblée avec une feuille de verre est d'abord polie sur une de ses faces ou préparée pour présenter un état de surface suffisant pour pouvoir être assemblée par interposition d'une couche adhésive avec la feuille de verre, puis elle est assemblée avec ladite feuille de verre avec interposition de la couche adhésive qui, de préférence se présente sous la forme d'une feuille préformée, la face polie ou préparée de la plaque de marbre étant au contact de la couche adhésive. La préparation de la face de la plaque peut comprendre une imprégnation par une résine comme décrit précédemment.

Cette imprégnation peut se faire par trempage, enduction ou pulvérisation pneumatique ou sans air. Cette imprégnation peut être favorisée par une mise de la plaque sous vide suivie ou non d'une mise sous pression. Cette opération de mise sous vide ou vide/pression peut s'effectuer dans un autoclave permettant l'introduction des plaques ornementales à traiter. Après réalisation du vide et introduction de la résine dans l'autoclave, on peut éventuellement appliquer une pression supérieure à la pression atmosphérique, par exemple une pression de 0,1 à 20 bars au dessus de la pression atmosphérique. L'utilisation du vide et/ou pression permet une meilleure pénétration de la résine dans au moins les couches superficielles des plaques ornementales ; cette pénétration étant alors plus profonde et/ou plus rapide.

Après imprégnation, la résine peut être polymérisée par tout moyen, le cas échéant réticulée, notamment par rayonnement gamma.

Ainsi imprégné, le marbre (ou la roche) qui n'est plus poreux n'est plus sensible à l'humidité. Il présente une résistance mécanique et une stabilité renforcées ce qui facilite notamment sa découpe en plaques plus minces, en particulier par simple sciage dans son épaisseur. En devenant hydrophobe le marbre est alors aussi moins sensible aux salissures.

L'assemblage feuilleté est soumis à un cycle d'assemblage qui peut être celui utilisé pour la fabrication des vitrages feuilletés, c'est-à-dire comprenant un assemblage dit préliminaire par utilisation du vide ou de la pression, par exemple par mise dans un sac dans lequel on fait le vide, et un assemblage dit définitif par passage dans un autoclave.

Ainsi, l'assemblage feuilleté est placé dans un sac, où il est soumis à un vide et le cas échéant à une élévation de la température afin d'assurer un assemblage préliminaire, puis l'ensemble subit un cycle d'autoclave assurant l'assemblage définitif comme dans la fabrication des vitrages feuilletés.

Lorsque la structure feuilletée est assemblée de façon définitive, on peut alors polir la face libre extérieure de la plaque de marbre et éventuellement réduire son épaisseur jusqu'aux faibles valeurs indiquées précédemment. Le polissage peut se faire sans risque de casse de la plaque de marbre bien plus résistante dans sa structure feuilletée que dans une structure monolithique.

La structure feuilletée selon l'invention, lorsqu'avantageusement, elle comprend une plaque de marbre de faible épaisseur, peut être facilement montée sur une armature en façade d'un bâtiment. Ce montage non collé sur le mur permet par transparence (translucidité) et éventuellement grâce à l'appui d'une lumière artificielle de découvrir les dessins et la structure des veines du marbre.

Cette structure translucide procure un éclairement de l'intérieur avec une lumière diffuse et rend l'environnement très agréable. Cette structure feuilletée peut aussi faire office de pare-soleil d'un point de vue thermique.

Il est évidemment important que la structure feuilletée se conserve dans le temps, quelque soient les conditions d'utilisation. Le choix d'un polyuréthane thermoplastique permet d'atteindre cet objectif car l'adhésion de ce polyuréthane avec le verre et le marbre est très bonne et durable. Cette adhésion peut encore être améliorée ou assurée par un traitement supplémentaire des feuilles à l'aide d'un primaire au moment de l'assemblage de la structure feuilletée ou encore à l'aide d'un traitement d'imprégnation par une résine comme décrite précédemment.

Ainsi avantageusement selon l'invention on traite la face de !a plaque de marbre et la face de la feuille de verre destinées à venir au contact de la couche adhésive à l'aide d'un primaire qui peut être essentiellement un organosilane du type de ceux utilisés pour la fabrication des vitrages feuilletés de sécurité évoqués ci-dessus associant une feuille de verre et une feuille de polycarbonate.

L'épaisseur de la feuille de verre peut être très variable selon le rôle et la fonction remplis par cette feuille.

Cette épaisseur peut avoir toutes les épaisseurs des feuilles de verre utilisées dans les vitrages feuilletés, elle est généralement comprise entre 2 et 20 mm. Le verre est avantageusement trempé ou recuit.

La face du verre orientée vers l'extérieure de la structure feuilletée est avantageusement traitée pour présenter des propriétés anti-reflets. Ces propriétés anti-reflets peuvent être procurées par l'adjonction de couches spécifiques, par exemple par la superposition d'une couche bas indice à une couche haut indice tel que décrit par exemple dans les publications WO 92/04185 ou EP 505 547.

En variante les propriétés anti-reflets peuvent être obtenues par un traitement mécanique ou chimique de la face de la feuille de verre lui procurant un dépoli.

Lorsque la structure feuilletée selon l'invention est symétrique, c'est-à-dire qu'elle comporte deux feuilles extérieures en un même matériau et notamment deux feuilles de verre emprisonnant une feuille de marbre, le procédé de fabrication peut utiliser les opérations décrites précédemment, l'assemblage de la deuxième feuille de verre étant réalisé après avoir éventuellement réduit l'épaisseur de la plaque de marbre.

La structure feuilletée selon l'invention peut aussi comprendre une structure comprenant deux plaques de roche ornementale en tant que plaques extérieures, en particulier lorsque les plaques de roche ont subi un traitement d'imprégnation.

La couche adhésive se présente avantageusement sous forme d'une feuille préformée.

L'épaisseur de la couche est avantageusement l'épaisseur usuelle utilisée dans les vitrages feuilletés, c'est-à-dire généralement comprise entre 0,5 et 2 mm.

Cette épaisseur peut être faible car les deux matériaux en feuilles à assembler: marbre et verre, présentent des coefficients de dilatation assez voisins.

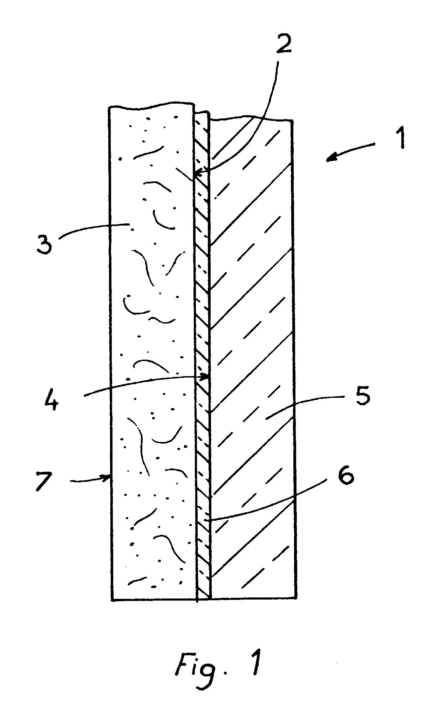

D'autres caractéristiques et avantages de l'invention apparaîtront dans la description d'exemples de réalisation faite en référence à la figure 1.

On veut fabriquer une structure feuilletée 1 translucide, telle que représentée sur la figure 1, destinée à être utilisée en tant que parement de façade d'un bâtiment. Cette structure comprend une plaque de marbre 3, une couche intercalaire adhésive 6 et une feuille de verre 5.

A cette fin, on polit une face 2 de la plaque de marbre 3 jusqu'à environ 15 mm d'épaisseur. La face polie 2 et une face 4 de la feuille de verre trempée 5 de 6 mm d'épaisseur sont toutes deux traitées à l'aide d'une composition d'un primaire comprenant essentiellement un organosilane, notamment le gamma -glycidoxypropyltriméthoxysilane. On interpose entre les faces traitées une feuille transparente 6 de 0,8 mm d'épaisseur d'un polyuréthane thermoplastique. L'empilement est placé dans un sac dans lequel on fait le vide, c'est-à-dire qu'on réduit la pression à une valeur inférieure à la pression atmosphérique durant 5 heures. La structure feuilletée dans son sac est placée dans un autoclave où elle subit un cycle d'assemblage de 5 heures à une pression de 10 bars et une température de 140°C.

Après ce cycle d'assemblage définitif, la structure feuilletée est retirée de l'autoclave et de son sac et la face extérieure 7 de la plaque de marbre est polie jusqu'à ce qu'elle atteigne une épaisseur d'environ 6 mm.

La structure feuilletée par exemple de forme rectangulaire présentant des dimensions de surface de 1,40 x 0,9m est alors prête à être montée en tant que parement de façade de bâtiment. A cet fin, elle est montée sur une armature distante du mur porteur d'environ 10 cm ou directement sur une armature porteuse. La feuille de verre qui présente avantageusement une face extérieure anti-reflets peut être orientée vers l'extérieur du bâtiment ou au contraire elle peut être orientée vers l'intérieur du bâtiment.

En plaçant un éclairage derrière la structure feuilletée, on peut obtenir des jeux de lumière dans les veines du marbre. On obtient ainsi un élément de façade résistant et très esthétique.

Vu de l'intérieur, la structure feuilletée translucide procure un éclairement de l'intérieur et, par diffusion de la lumière elle offre un environnement agréable.

L'invention concerne également des structures feuilletées utilisant à la place d'une plaque de marbre, une plaque à base d'autres roches ornementales.

Lorsque la translucidité n'est pas recherchée, la structure feuilletée selon l'invention peut utiliser une feuille de verre émaillée par exemple et/ou une couche adhésive opaque.

## Revendications

1. Structure feuilletée apte à être utilisée notamment en tant que parement ou élément de façade d'un bâtiment, caractérisée en ce qu'elle comprend au moins une plaque en une roche, notamment une roche ornementale, assemblée à l'aide d'au moins une couche adhésive, à au moins une feuille de verre.

2. Structure feuilletée selon la revendication 1, caractérisée en ce que la roche ornementale est du marbre.

3. Structure feuilletée selon une des revendications 1 ou 2, caractérisée en ce que la couche adhésive est transparente et la structure feuilletée est translucide.

4. Structure feuilletée selon une des revendications 1 à 3, caractérisée en ce qu'au moins la face de la roche au contact de la couche adhésive a subie un traitement faisant barrière aux substances susceptibles d'affecter l'adhésion et/ou permettant un meilleur accrochage ou adhésion de la couche adhésive.

5. Structure feuilletée selon la revendication 4, caractérisée en ce que le traitement est un traitement d'imprégnation par une résine.

6. Structure feuilletée selon la revendication 5, caractérisée en ce que la résine d'imprégnation est réticulée notamment par rayonnement gamma.

7. Structure feuilletée selon une des revendications 1 à 6, caractérisée en ce qu'elle présente une structure asymétrique.

8. Structure feuilletée selon une des revendications 1 à 7, caractérisée en ce qu'elle présente une structure symétrique.

9. Structure feuilletée selon une des revendications 1 à 8, caractérisée en ce qu'elle présente une feuille de verre extérieure ayant une face anti-reflet.

10. Structure feuilletée selon une des revendications 1 à 9, caractérisée en ce que la couche adhésive est une couche de matière plastique à base d'un polyuréthane.

11. Structure feuilletée selon la revendication 10, caractérisée en ce que le polyuréthane est un polyuréthane thermoplastique.

12. Procédé de fabrication de la structure feuilletée selon une des revendications 1 à 11, caractérisé en ce que :
- on assemble une plaque de roche ornementale à une feuille de verre par utilisation d'une couche adhésive,
- on fait subir à l'assemblage un cycle d'assemblage,
- on polit la face libre de la plaque de roche ornementale, en réduisant le cas échéant son épaisseur jusqu'à la valeur désirée.

13. Procédé selon la revendication 12, caractérisé en ce qu'avant l'assemblage de la plaque de roche avec la feuille de verre, on polit la face de la plaque destinée à venir au contact de la couche adhésive.

14. Procédé selon une des revendications 12 ou 13, caractérisé en ce qu'avant l'assemblage, on traite la face de la plaque de roche, notamment avec une résine d'imprégnation.

15. Procédé selon une des revendications 12 à 14, caractérisé en ce que la couche adhésive est une feuille préformée notamment en polyuréthane thermoplastique.

16. Procédé selon la revendication 15, caractérisé en ce que la face de la plaque de roche et la face de la feuille de verre destinées à venir au contact de la feuille préformée sont traitées avant l'assemblage à l'aide d'un primaire.

17. Procédé selon la revendication 16, caractérisé en ce que le primaire est un organosilane.

18. Elément de façade de bâtiment, caractérisé en ce qu'il comprend une structure feuilletée selon une des revendications 1 à 11.

19. Elément de façade selon la revendication 18, caractérisé en ce qu'il est disposé devant un éclairage formant des jeux de lumière avec les veines ou autres motifs de structure de la roche ornementale, notamment les veines du marbre.
